# EUROPÄISCHE PATENTSCHRIFT

(11) **EP 3 960 591 B1**
(45) Veröffentlichungstag und Bekanntmachung des Hinweises auf die Patenterteilung: **12.06.2024**
(21) Anmeldenummer: 20193282.9
(22) Anmeldetag: 28.08.2020
(51) Int. Cl.: B62D 25/00, B62D 29/00, B29C 44/18

(54) **SCHOTTEIL**
BULKHEAD SECTION
PIÈCE ÉTANCHE

(43) Veröffentlichungstag der Anmeldung: 02.03.2022
(73) Patentinhaber: Henkel AG & Co. KGaA, 40589 Düsseldorf (DE)
(72) Erfinder: Kizler, Tobias, 69207 Sandhausen (DE); Siegel, Georg Manuel, 69239 Neckarsteinach (DE); Kochert, Stefan, 68799 Reilingen (DE); Santinho Ferreira, Dario Miguel, 69257 Wiesenbach (DE); Becker, Jochen, 74918 Angelbachtal (DE); Dalhäüser, Ralph, 68159 Viernheim (DE)
(74) Vertreter: Wagner Albiger & Partner Patentanwälte mbB

(56) Entgegenhaltungen:
- WO-A2-2010/014681
- DE-A1- 10 240 196
- DE-U1- 29 522 122
- US-A- 5 631 027
- US-A1- 2013 241 226

## Beschreibung

Die Erfindung betrifft ein Schottteil zur Abdichtung und/oder Abstützung eines Hohlraums, umfassend einen Träger sowie ein an dem Träger angeordnetes Expansionsmaterial, welches durch Aktivierung aus einem Ausgangszustand in einen expandierten Zustand überführbar ist.

Im Automobilbereich werden derartige Schottteile zur akustischen und/oder wasserdichten Abdichtung und Abschottung und/oder Abstützung von Hohlräumen in der Karosserie eingesetzt. Die Schottteile umfassen dabei einen Träger, welcher umlaufend mit einem Expansionsmaterial ausgestattet ist. Das Expansionsmaterial zeichnet sich dadurch aus, dass es im Einbauzustand des Schottteils durch Aktivierung aus einem Ausgangszustand in einen expandierten Zustand überführbar ist, in welchem es als Dichtungs- und/oder Stützmaterial zwischen dem Träger und angrenzenden Komponenten der Karosserie wirkt.

Gattungsgemäße Schotteile sind beispielsweise aus der US 2013/0241226 A1, der DE 102 40 196 A1, der DE 295 22 122 U1, der US 5,631,027 sowie der WO 2010/014681 A2 bekannt, wobei der Träger jeweils mindestens ein Ausgleichselement umfasst, durch welches eine Veränderlichkeit der effektiven Abdichtungsfläche des Trägers gegeben ist. Darüber hinaus ist jeweils ein Begrenzungselement vorgesehen, durch welches eine mit der Veränderung der effektiven Abdichtungsfläche einhergehende Bewegung zumindest eines Abschnitts des Trägers begrenzt wird.

Aufgrund des Bestrebens der Automobilindustrie, das Gewicht von Fahrzeugen möglichst gering zu halten, werden insbesondere für die Außenhaut der Fahrzeuge immer dünnere Bleche verwendet. Dies hat zur Folge, dass durch Schottteile der eingangs genannten Art, welche zwischen der Außenhaut und einer innenliegenden Komponente, beispielsweise einem weiteren Blech, verbaut werden, Abzeichnungen auf der Außenhaut in Form von Eindellungen nach innen oder Ausbeulungen nach außen sichtbar werden können. Die Ursache hierfür liegt im Wesentlichen in dem Verhalten des Expansionsmaterials, welches sich während des Expansionsvorgangs beispielsweise unter Wärmeeintrag ausdehnt und abdichtend und/oder abstützend an den umgebenden Komponenten zur Anlage kommt. Nach erfolgter Expansion kühlt das Expansionsmaterial wieder ab und zieht sich zumindest teilweise zusammen. Abhängig von den verwendeten Materialien für den Träger und das Expansionsmaterial und der Menge des Expansionsmaterials können durch eine zu starke Ausdehnung des Expansionsmaterials Ausbeulungen des dünnen Außenblechs nach außen bzw. durch das Zusammenziehen des abkühlenden Expansionsmaterials ein Einzug des Außenblechs nach innen verursacht werden. Dies stellt einen optischen Makel dar.

Grundsätzlich ist es möglich, das Expansions- und Verformungsverhalten und damit Eindellungen nach innen oder Ausbeulungen nach außen durch die Materialauswahl sowie durch maßliche Auslegung der beteiligten Bauteile zu beeinflussen. Dabei verbleibt stets ein Restrisiko, da es sich um ein komplexes System mit zahlreichen Einflussgrößen handelt. Dieser Zustand erscheint verbesserungswürdig.

Die vorliegende Erfindung hat es sich daher zur Aufgabe gemacht, ein Schottteil zur Abdichtung und/oder Abstützung eines Hohlraums im Karosseriebau bereitzustellen, welches einfach herzustellen ist, im Einbauzustand eine sehr gute Abdichtung gegenüber Geräuschen und Feuchtigkeit bietet und durch welches ein Einzug bzw. eine Ausbeulung einer an das Schottteil angrenzenden Komponente, insbesondere eines Außenblechs, verhindert werden kann.

Diese Aufgabe wird gelöst durch ein Schottteil mit den Merkmalen des Patentanspruchs 1.

Vorteilhafte Ausgestaltungen und Weiterbildungen der Erfindung sind Gegenstand der abhängigen Ansprüche.

Zur Lösung der Aufgabe wird gemäß Patentanspruch 1 ein Schottteil zur Abdichtung und/oder Abstützung eines Hohlraums vorgeschlagen, umfassend einen Träger sowie ein an dem Träger angeordnetes Expansionsmaterial, welches durch Aktivierung aus einem Ausgangszustand in einen expandierten Zustand überführbar ist, wobei der Träger mindestens ein Ausgleichselement umfasst, durch welches eine Veränderlichkeit einer effektiven Abdichtungsfläche des Trägers gegeben ist, derart, dass durch eine auf den Träger wirkende Kraft eine Veränderung der effektiven Abdichtungsfläche des Trägers bewirkbar ist, und wobei ein Begrenzungselement vorgesehen ist, durch welches eine mit der Veränderung der effektiven Abdichtungsfläche einhergehende Bewegung zumindest eines Abschnitts des Trägers begrenzt wird. Das Schottteil zeichnet sich dadurch aus, dass das Begrenzungselement eine Anstoßkante umfasst, welche stoßdämpfend ausgebildet ist.

Das erfindungsgemäße Schottteil wird zur Abdichtung eines Hohlraums verwendet und wird hierzu in eine den Hohlraum begrenzende Fläche eingesetzt. Die den Hohlraum begrenzende Fläche, welche es abzudichten gilt, wird im Folgenden auch als Begrenzungsfläche bezeichnet. Zur Abdichtung der Begrenzungsfläche trägt im Einbauzustand des Schottteils sowohl der Träger als auch das Expansionsmaterial des Schottteils bei. Unter der effektiven Abdichtungsfläche des Trägers wird dabei im Sinne der Erfindung eine Projektionsfläche des Trägers verstanden, welche im Einbauzustand des Schottteils in der Ebene der Begrenzungsfläche oder parallel zu dieser liegt. Analog dazu ist mit der effektiven Abdichtungsfläche des Schottteils die Projektionsfläche des gesamten Schottteils bezeichnet, die im Einbauzustand die gesamte Begrenzungsfläche abdeckt und effektiv abdichtet.

Grundsätzlich umfasst die Erfindung dabei auch Schotteile, die nicht primär abdichtende sondern beispielsweise vorrangig abstützende Wirkung haben. So sind Anwendungsbereiche denkbar, in denen die Anforderungen an eine akustische Abdichtung gering sind und die Begrenzungsfläche entsprechend nicht vollflächig abgedeckt werden muss. Auch hier kann ein erfindungsgemäßes Schottteil eingesetzt werden, welches dann primär abstützende Wirkung hat, gleichzeitig aber Bereiche aufweisen kann, welche für Schallwellen durchlässig sind.

Mit anderen Worten sieht die Erfindung gemäß Patentanspruch 1 vor, dass der Träger ein Ausgleichselement umfasst, durch welches der Träger auslegbar ist, derart, dass sich die effektive Abdichtungsfläche des Trägers als Reaktion auf eine auf den Träger wirkende Kraft flexibel verändern kann. Eine Kraftwirkung auf den Träger kann dabei in einem Einbauzustand des Schottteils durch das Expansionsverhalten des Expansionsmaterials hervorgerufen werden. Bei Aktivierung des randseitig an dem Träger angeordneten Expansionsmaterials dehnt dieses sich zunächst aus bzw. schäumt auf, bis es an den den Hohlraum begrenzenden Komponenten zur Anlage kommt. Abhängig von den verwendeten Materialien und der Menge an Expansionsmaterial kann die Expansionswirkung dabei so stark sein, dass eine merkliche Kraft auf die umliegenden Komponenten sowie auf den Träger wirkt. Um ein Ausweichen der umliegenden Komponenten, beispielsweise ein Ausbeulen eines Außenblechs nach außen, als Reaktion auf diese Kraft zu verhindern, ist es erfindungsgemäß vorgesehen, dass sich die effektive Abdichtungsfläche des Trägers ändern kann. Zu diesem Zweck weist der Träger mindestens ein Ausgleichselement auf, durch welches eine Veränderlichkeit der effektiven Abdichtungsfläche des Trägers gegeben ist und damit ein Distanzausgleich zugelassen wird. Auf eine starke Ausdehnung des Expansionsmaterials im Zuge der Aktivierung kann der Träger somit mit einer Veränderung, in diesem Falle mit einer Verkleinerung, seiner effektiven Abdichtungsfläche reagieren, so dass die durch das Expansionsmaterial und den Träger insgesamt abgedichtete Fläche im Wesentlichen konstant bleibt und es zu keinerlei Ausbeulungen an umgebenden Komponenten kommt.

Analog kann im Zuge der Abkühlung und des Zusammenziehens des Expansionsmaterials eine Kraft auf den Träger sowie auf umliegende Komponenten wirken, die einen Einzug nach innen hervorrufen kann. Auch hier wirkt die erfindungsgemäß vorgesehene Veränderlichkeit der effektiven Abdichtungsfläche des Trägers entgegen, indem der Träger als Reaktion auf die wirkenden Kräfte seine effektive Abdichtungsfläche vergrößert, so dass die durch das Expansionsmaterial und den Träger insgesamt abgedichtete Fläche im Wesentlichen wiederum konstant bleibt und es zu keinerlei Einzug an umgebenden Komponenten kommt.

Das Ausgleichselement, durch welches die Veränderlichkeit der effektiven Abdichtungsfläche des Trägers gegeben ist, kann dabei jeweils so ausgebildet sein, dass in einem Einbauzustand des Schottteils der Schwellenwert der Kraft, bei welchem eine Änderung der effektiven Abdichtungsfläche des Trägers eintritt, niedriger liegt, als ein Schwellenwert, ab dem es zu einem Ausweichen umliegender, den Hohlraum begrenzender Komponenten kommt. Mit anderen Worten kann das Ausgleichselement leicht beweglich ausgebildet sein.

Zur Begrenzung einer mit der Veränderung der effektiven Abdichtungsfläche des Trägers einhergehenden Bewegung zumindest eines Abschnitts des Trägers sieht die Erfindung ein Begrenzungselement vor. Hierdurch wird sichergestellt, dass der Träger nicht beliebig weit nachgeben kann und dass das Expansionsmaterial trotz des Nachgebens des Trägers als Reaktion auf eine wirkende Kraft mit ausreichendem Anpressdruck an den den Hohlraum begrenzenden Komponenten zur Anlage kommt, so dass eine sichere und gut abdichtende bzw. abstützende Verbindung zwischen dem Schottteil und den begrenzenden Komponenten hergestellt wird. Gemäß Patentanspruch 1 ist es erfindungsgemäß vorgesehen, dass das Begrenzungselement eine Anstoßkante umfasst, welche stoßdämpfend ausgebildet ist. Durch eine derartige stoßdämpfende Auslegung des Begrenzungselements entsteht durch das Anstoßen kein Schaden an dem Schottteil.

Im Einbauzustand gewährleistet ein abdichtend ausgebildetes Schottteil eine sehr gute Abdichtung des Hohlraums gegenüber Wärme, Feuchtigkeit und Geräuschen. Auch Schmutz, Staub oder andere Arten von Partikeln können nicht durch das Schottteil dringen.

Das Ausgleichselement kann dabei in Form eines Federelements oder einer biegsamen Bauteilkomponente realisiert sein, die bei einer Kraftwirkung auf den Träger eine Aufweitung oder Verkleinerung der effektiven Abdichtungsfläche des Trägers bewirken kann. Beispielsweise können ein feststehender Abschnitt und ein beweglicher Abschnitt des Trägers über das Ausgleichselement derart miteinander verbunden sein, dass der bewegliche Abschnitt durch das Ausgleichselement von dem feststehenden Abschnitt entkoppelt ist. Somit kann der bewegliche Abschnitt in definierbaren Grenzen bewegt werden, ohne dass sich der feststehende Abschnitt bewegt. Das Ausgleichselement ist Teil des Trägers und hat vorzugsweise gleiche abdichtende Eigenschaften wie der Träger.

Gemäß einer Ausgestaltung der Erfindung ist das Ausgleichselement als Biegeelement ausgebildet, durch welches ein Biegewinkel zwischen zwei Abschnitten des Trägers eingeschlossen wird. Bei dem Biegeelement kann es sich beispielsweise um eine Knickstelle, ein Scharnier, ein Federelement oder eine dazu ähnliche Vorrichtung handeln, die den Träger zu einer Biegebewegung befähigt. Die Biegung erfolgt dabei um eine Biegeachse, welche vorzugsweise parallel zu der Begrenzungsfläche liegt. Der zwischen zwei Abschnitten des Trägers eingeschlossene Biegewinkel kann in einem Bereich zwischen 0° und 180° liegen.

Nach einer weiteren Ausgestaltung der Erfindung ist das Ausgleichselement als Dünnstelle ausgebildet. Als eine Dünnstelle ist ein Bereich des Trägers definiert, in welchem der Träger dünner ausgebildet ist als in an diesen Bereich angrenzenden Bereichen. Ein solcher, beispielsweise nach Art eines Filmscharniers ausgebildeter Bereich, weist eine vorteilhafte Biegefähigkeiten auf. Der gesamte Träger einschließlich der Dünnstelle kann aus einem einheitlichen Material gefertigt sein, beispielsweise in einem Spritzgussverfahren.

Das Ausgleichselement kann mit vorteilhaften temperatur- und zeitabhängigen Eigenschaften ausgestattet sein und kann beispielsweise so ausgelegt sein, dass es zeitlich schnell reagiert. So kann das Ausgleichselement sehr schnell eine Veränderung der effektiven Abdichtungsfläche des Trägers, die durch schnelles Aufschäumen und/oder Zusammenziehen des Expansionsmaterials verursacht wird, bewirken.

Eine Kraft, die auf den Träger wirkt, so dass eine Veränderung der effektiven Abdichtungsfläche des Trägers notwendig ist, kann verschiedene Ursachen haben. In erster Linie entsteht die Kraft durch das Aufschäumen und/oder Zusammenziehen des Expansionsmaterials. Weiterhin kann diese Kraft durch temperaturbedingte Verformung des Trägers und/oder der Umgebung oder des Expansionsmaterials entstehen.

Der Träger kann in erster Linie die Aufgabe haben, die durch einen Hohlraum aufgespannte Begrenzungsfläche abzudichten. Der Träger deckt dabei vorzugsweise den größten Teil der Begrenzungsfläche ab. Den verbleibenden Teil der Begrenzungsfläche deckt das Expansionsmaterial ab.

Der Träger kann aus einem Material gefertigt sein, das vorteilhafte abdichtende Eigenschaften aufweist. Das Material kann so gewählt sein, dass es optimale Abdichtungen gegen Wasser, Öl und/oder ähnlichen Flüssigkeiten aufweist. Zudem kann ein leichtes, stabiles und/oder bruchsicheres Material ausgewählt werden. Der Träger kann zur Strukturstabilität des Gesamtobjektes beitragen. So kann der Träger für den Einsatz in Hohlräumen eines Automobils für mehr statische und dynamische Stabilität sorgen. Für den Fall, dass der Hohlraum kollabiert, beispielweise durch einen Unfall, kann das Trägermaterial so ausgewählt werden, dass es vorteilhafte Materialeigenschaften aufweist. Beispielsweise kann das Trägermaterial so ausgewählt sein, dass im Falle der Zerstörung ein Großteil der Verformungsenergie durch den Träger dissipiert. So kann das Material so gewählt sein, dass der Träger bei Zerstörung beispielweise in feinste Einzelteile zerbricht oder sich vorteilhaft deformiert. Das Material ist vorzugsweise so ausgewählt, dass Schäden im Hohlraum oder den benachbarten Regionen, wie beispielsweise der Kabine eines Automobils, verhindert werden.

Weiterhin kann das Trägermaterial so gewählt werden, dass Eigenschwingen und/oder Körperschall minimiert werden. Es kann sich dabei um Eigenschwingung des Trägers oder des geamten Systems handeln, in welchem der Hohlraum ausgebildet ist. Ebenfalls kann das Trägermaterial optimale schallabweisende Eigenschaften aufweisen. Das Trägermaterial kann isolierend gegenüber Schallwellen und elektromagnetischen Wellen wirken. Als Trägermaterial kann beispielsweise ein Polymermaterial verwendet werden.

Das Expansionsmaterial ist selbst ein Teil des Schottteils. Dabei kann es vorgesehen sein, dass der Träger umlaufend mit Expansionsmaterial versehen ist, beispielsweise durch Umspritzen. Das Expansionsmaterial hat grundsätzlich zwei Funktionen. Zum einen dient es im expandierten Zustand zur Fixierung des Schottteils in einem Hohlraum, beispielsweise durch Verkleben oder Verklemmen. Zum anderen dient das Expansionsmaterial zusammen mit dem Träger zum Abdichten der Begrenzungsfläche des Hohlraums. Das Expansionsmaterial füllt dabei im expandierten Zustand den Bereich aus, der sich zwischen dem Träger und den den Hohlraum begrenzenden Komponenten ergibt. Das Expansionsmaterial kann dabei vorteilhafterweise anhaftende und/oder klebende Eigenschaften aufweisen. Außerdem kann das Expansionsmaterial elastische Eigenschaften aufweisen. Dabei kann das Expansionsmaterial optimale für den Fall angepasste abdichtende Eigenschaften gegenüber Feuchtigkeit und Geräuschen aufweisen.

Das Expansionsmaterial kann beispielsweise ein Material sein, welches bei Aktivierung aufschäumt und sich in aufgeschäumtem Zustand verfestigt. Es kann sich dabei beispielsweise um ein Produkt aus der unter dem Namen Teroson^{®} bekannten Produktreihe handeln. Das Volumen des expandierten Expansionsmaterial kann etwa 10% bis 3000% des Volumens des Expansionsmaterials im Ausgangszustand betragen. Es ist möglich, dass das Expansionsmaterial nach der Aktivierung zunächst expandiert und sich nach Erreichen des maximalen Volumens zumindest teilweise wieder zusammenzieht.

Die Aktivierung des Expansionsmaterials kann vorzugsweise durch Wärmeeintrag erfolgen. Alternativ sind auch andere physikalische und/oder chemische Aktivierungsformen denkbar.

Durch das erfindungsgemäß vorgesehene Begrenzungselement wird eine mit der Veränderung der effektiven Abdichtungsfläche des Trägers einhergehenden Bewegung zumindest eines Abschnitts des Trägers begrenzt. Mit anderen Worten kann der Träger als Reaktion auf eine wirkende Kraft nicht beliebig nachgeben. Auf diese Weise ist gewährleistet, dass das Expansionsmaterial in jedem Fall mit einem ausreichenden Anpressdruck an den den Hohlraum begrenzenden Komponenten zur Anlage kommt, so dass eine sichere und gut abdichtende Verbindung zwischen dem Schottteil und den begrenzenden Komponenten hergestellt wird.

Eine Ausgestaltung der Erfindung sieht vor, dass das Begrenzungselement an einem feststehenden Abschnitt des Trägers angeordnet ist. Unter einem feststehenden Abschnitt wird dabei ein Abschnitt des Trägers verstanden, welcher in einem Einbauzustand des Schotteils im Zuge der Veränderung der effektiven Abdichtungsfläche des Trägers seine Position im Wesentlichen nicht ändert. Demgegenüber wird unter einem beweglichen Abschnitt des Trägers ein Abschnitt verstanden, welcher in einem Einbauzustand des Schottteils im Zuge der Veränderung der effektiven Abdichtungsfläche des Trägers seine Position ändert. Das Begrenzungselement kann in einer alternativen Ausgestaltung auch an einem beweglichen Abschnitt des Trägers angeordnet sein. Das Begrenzungselement wirkt dabei jeweils als in einen Zwischenraum zwischen einem beweglichen und einem feststehenden Abschnitt eingebrachter Anschlag, derart, dass eine Bewegung eines beweglichen Abschnitts gegenüber einem feststehenden Abschnitt durch das Begrenzungselement auf eine kleine Bewegung begrenzt ist.

Bei einer Ausgestaltung des Ausgleichselements als Biegeelement mit einem zwischen zwei Abschnitten des Trägers eingeschlossenen Biegewinkel kann das Begrenzungselement derart an einem der beiden Abschnitte angeordnet sein, dass eine Bewegung des einen Abschnitts gegenüber dem zweiten Abschnitt nur über einen begrenzten Winkelbereich des Biegewinkels erfolgen kann. Beispielsweise kann das Begrenzungselement so gestaltet sein, dass eine Bewegung des einen Abschnitts gegenüber dem anderen Abschnitt lediglich über einen Winkelbereich von 0° bis 20° erfolgen kann, während größere Winkelbewegungen durch das Begrenzungselement verhindert werden.

Das Begrenzungselement kann grundsätzlich verschiedene Querschnitte ausweisen. Beispielsweise kann das Begrenzungselement einen dreieckigen oder einen trapezförmigen Querschnitt aufweisen.

Eine Ausführungsvariante der Erfindung sieht vor, dass das Schottteil mit mindestens einer Positionierhilfe ausgerüstet ist, wobei die Positionierhilfe eine Stützrippe umfasst, die ein Mittel zur Positionierung des Trägers aufweist. Die Positionierhilfe unterstützt bei einer exakten Positionierung und Abstützung des Schottteils in einem Hohlraum und stellt sicher, dass das Schottteil nach seiner Montage in der gewünschten Ausrichtung verbleibt. Die Positionierhilfe kann dabei so gestaltet sein, dass eine Stützfläche der Positionierhilfe bündig an einer den Hohlraum begrenzenden Wandung anliegt.

Zusammenfassend ist mit dem beschriebenen Schottteil eine sehr gute Abdichtung eines Hohlraums gegenüber Feuchtigkeit und Geräuschen und/oder eine Abstützung möglich, wobei die erfindungsgemäß vorgesehene Veränderlichkeit der effektiven Abdichtungsfläche des Trägers zu einer Entkopplung von Zug- bzw. Druckkräften führt, derart, dass im Zuge der Aktivierung des Expansionsmaterials keine bzw. keine wesentlichen Kräfte auf angrenzende Komponenten wirken und ein Ausbeulen und/oder Einzug dieser Konponenten wirksam verhindert werden kann. Hierdurch bestehen mehr Freiheiten bei der Auswahl des Materials für das Trägermaterial und das Expansionsmaterial. Durch das erfindungsgemäß vorgesehene Begrenzungselement ist darüber hinaus trotz der Nachgiebigkeit des Trägers eine ausreichende Dichtigkeit gegenüber Feuchtigkeit und Schall im Anschlussbereich des Schottteils gegeben.

Im Folgenden wird die Erfindung anhand von Ausführungsbeispielen und unter Bezugnahme auf die beigefügten Zeichnungen näher erläutert. Es zeigen:
- Figur 1:: ein Ausführungsbeispiel des erfindungsgemäßen Schottteils in einer Schnittdarstellung;
- Figur 2:: ein weiteres Ausführungsbeispiel des Schottteils in einer Schnittdarstellung;
- Figur 3:: ein weiteres Ausführungsbeispiel des Schottteils in einer Schnittdarstellung;
- Figur 4:: ein weiteres Ausführungsbeispiel des Schottteils in einer perspektivischen Ansicht.

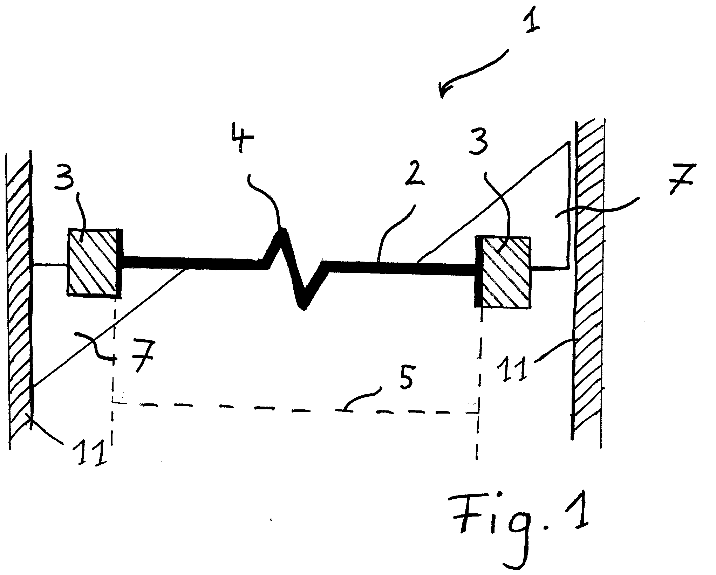

Figur 1 zeigt in einer Schnittdarstellung ein Ausführungsbeispiel eines Schottteils 1, welches in einem Hohlraum zwischen zwei Blechen 11 einer Karosserie positioniert ist. Das Schottteil 1 umfasst einen Träger 2 sowie randseitig an dem Träger 2 angeordnetes Expansionsmaterial 3. Das Expansionsmaterial 3 befindet sich in der Darstellung der Figur 1 in einem Ausgangszustand, in dem es noch nicht aufgeschäumt bzw. expandiert ist.

Der Träger 2 umfasst weiterhin ein Ausgleichselement 4, welches als Federelement ausgebildet ist. Das Federelement ermöglicht lineare Längenänderungen des Trägers 2 entlang einer auf dem Träger 2 verlaufenden Achse. Dadurch kann sich als Reaktion auf eine auf den Träger 2 wirkende Kraft die Länge des Trägers 2 entlang dieser Achse und damit die effektive Abdichtungsfläche 5 des Trägers 2 ändern. Die effektive Abdichtungsfläche 5 des Trägers 2 ist als Projektionsfläche der Fläche des Trägers 2 in der Figur 1 eingezeichnet.

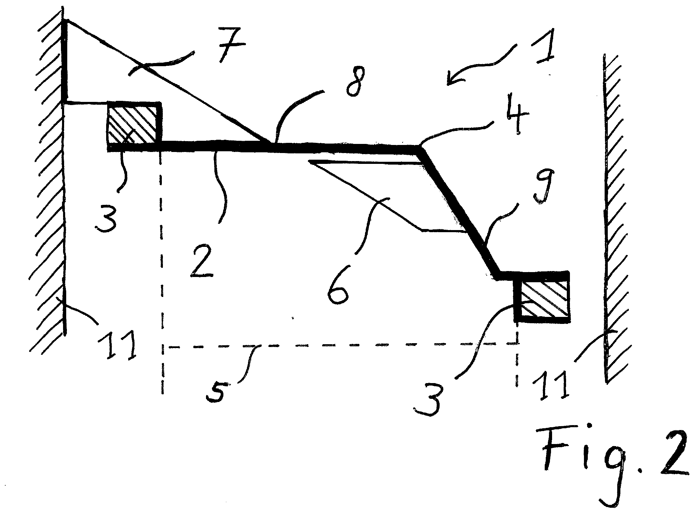

Ein Begrenzungselement ist in der Figur 1 aus Gründen der Übersichtlichkeit nicht eingezeichnet. Dessen Funktion wird unten im Zusammenhang mit den Figuren 2 bis 4 genauer erläutert.

Das Schottteil 1 ist darüber hinaus mit zwei Positionierhilfen 7 ausgerüstet. Die Positionierhilfen 7 sind dabei als Stützrippen ausgestaltet, die jeweils an den Rändern des Trägers 2 angeordnet sind. Hierbei helfen die Stützrippen dabei, die mit Expansionsmaterial 3 ausgestatteten Ränder des Trägers 2 an die Bleche 11 zu führen. Jede Stützrippe hat dabei eine Stützfläche, die an das jeweilige Blech angelegt wird.

Die Abdichtung des Hohlraums mithilfe des Schottteils 1 erfolgt folgendermaßen: Das Schottteil 1 wird durch die Positionierhilfen 7 in dem Hohlraum in Position gehalten. Daraufhin wird das Expansionsmaterial 3 durch Wärmeeintrag aktiviert. Bei Aktivierung des Expansionsmaterials 3 dehnt sich dieses zunächst aus bzw. schäumt auf, und kommt an den Blechen 11 zur Anlage. Bei anhaltendem Expansionsprozess wirkt eine Kraft auf die Bleche 11 sowie auf den Träger 2. Als Reaktion auf diese Kraftwirkung reagiert das als Federelement ausgebildete Ausgleichselement 4 und wird zusammengedrückt. Hierdurch ändert sich die effektive Abdichtungsfläche 5 des Trägers 2, sie wird kleiner. Mit anderen Worten wird durch den Träger 2 ein Distanzausgleich geschaffen, derart, dass ein Ausweichen bzw. Ausbeulen der Bleche 11 nach außen verhindert werden kann. Auf eine starke Ausdehnung des Expansionsmaterials 3 im Zuge der Aktivierung reagiert der Träger 2 somit mit einer Verkleinerung seiner effektiven Abdichtungsfläche 5, so dass die durch das Expansionsmaterial 3 und den Träger 2 insgesamt abgedichtete Fläche im Wesentlichen konstant bleibt und es zu keinerlei Ausbeulungen an den Außenblechen 11 kommt.

Ebenso kann nach erfolgter Aktivierung während des Abkühlens des Expansionsmaterials ein Einzug der Bleche 11 nach Innen in den Hohlraum hinein verhindert werden. Das abkühlende Expansionsmaterial 3 zieht sich zumindest teilweise wieder zusammen. Auch durch diesen Prozess können Kräfte auf den Träger 2 sowie auf die Bleche 11 wirksam werden, die nun in die entgegengesetzte Richtung gerichtet sind. Als Reaktion auf diese Kraftwirkungen wird das Ausgleichselement 4 gedehnt, wodurch die effektive Abdichtungsfläche 5 des Trägers 2 größer wird. Die durch das Expansionsmaterial 3 und den Träger 2 insgesamt abgedichtete Fläche bleibt damit auch in diesem Fall im Wesentlichen konstant.

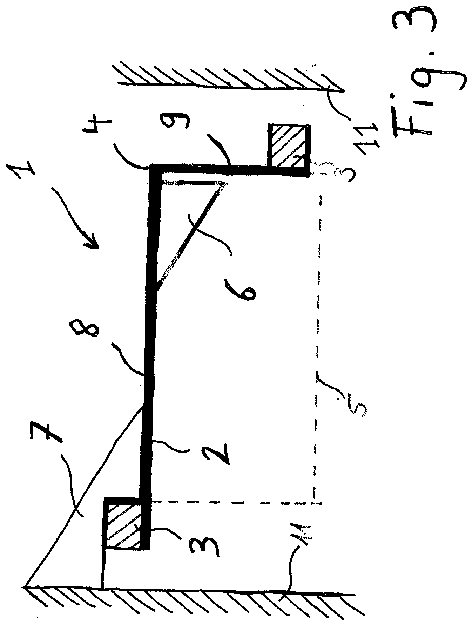

Figur 2 zeigt ein alternatives Ausführungsbeispiel eines Schottteils 1. Hierbei ist der Träger 2 mit einem als Filmscharnier ausgebildeten Ausgleichselement 4 ausgerüstet, welches in der Darstellung der Figur nicht genauer dargestellt ist. Durch das Filmscharnier ist in einem Einbauzustand des Schottteils 1 ein beweglicher Abschnitt 9 gegenüber einem feststehenden Abschnitt 8 des Trägers 2 beweglich. I\n dem in der Figur 2 dargestellten Zustand schließen die Abschnitte 8 und 9 einen Biegewinkel von etwa 120° miteinander ein. Als Reaktion auf eine durch das Expansionsverhalten des Expansionsmaterials 3 hervorgerufene Kraftwirkung auf den Träger 2 kann der bewegliche Abschnitt 9 gegenüber dem feststehenden Abschnitt 8 derart verschwenken, dass sich der eingeschlossene Biegewinkel vergrößert oder verkleinert. Bei einer Verkleinerung des Biegewinkels begrenzt ein an dem beweglichen Abschnitt 9 angeordnetes Begrenzungselement 6 die Schwenkbewegung des Abschnitts 9 auf einen kleinen Winkelbereich. Ein Schwenken des Abschnitts 9 von dem rechten Blech 11 weg führt sehr bald zum Anschlag des Begrenzungselements 6 an dem feststehenden Abschnitt 8. Hierdurch wird sichergestellt, dass der bewegliche Abschnitt 9 als Reaktion auf eine wirkende Kraft nicht beliebig weit ausweichen kann und dass das Expansionsmaterial 3 trotz des Nachgebens des Abschnitts 9 mit ausreichendem Anpressdruck an dem Blech 11 zur Anlage kommt, so dass eine sichere und gut abdichtende Verbindung zwischen dem Schottteil 1 und dem Blech 11 hergestellt wird. Das Verschwenken des beweglichen Abschnitts 9 gegenüber dem feststehenden Abschnitt 8 geht mit einer Änderung der effektiven Abdichtungsfläche 5 des Trägers 2 einher. Die stoßdämpfend ausgebildete Anstoßkante 10 des Begrenzungselements 6 ist in den Figuren 2 und 3 nicht dargestellt.

Figur 3 zeigt ein weiteres Ausführungsbeispiel des Schottteils 1 mit einem als Filmscharnier ausgebildeten Ausgleichselement 4. Die Funktionsweise entspricht grundsätzlich der im Zusammenhang mit Figur 2 beschriebenen. In dem hier dargestellten Ausgangszustand wird ein Biegewinkel von etwa 90° zwischen dem feststehenden Abschnitt 8 und dem beweglichen Abschnitt 9 des Trägers 2 eingeschlossen. Ein Begrenzungselement 6 ist bei dieser Ausführungsvariante an dem feststehenden Abschnitt 8 des Trägers 2 angeordnet. Entsprechend kann eine Schwenkbewegung des beweglichen Abschnitts 9 von dem rechten Blech 11 weg nur bis zum Anschlag des Abschnitts 9 an dem Begrenzungselement 6 erfolgen und ist damit auf definierte Winkelbereiche begrenzt. Durch Verschwenken des beweglichen Abschnitts 9 gegenüber dem feststehenden Abschnitt 8 als Reaktion auf eine wirkende Kraft ändert sich die effektive Abdichtungsfläche 5 des Trägers 2.

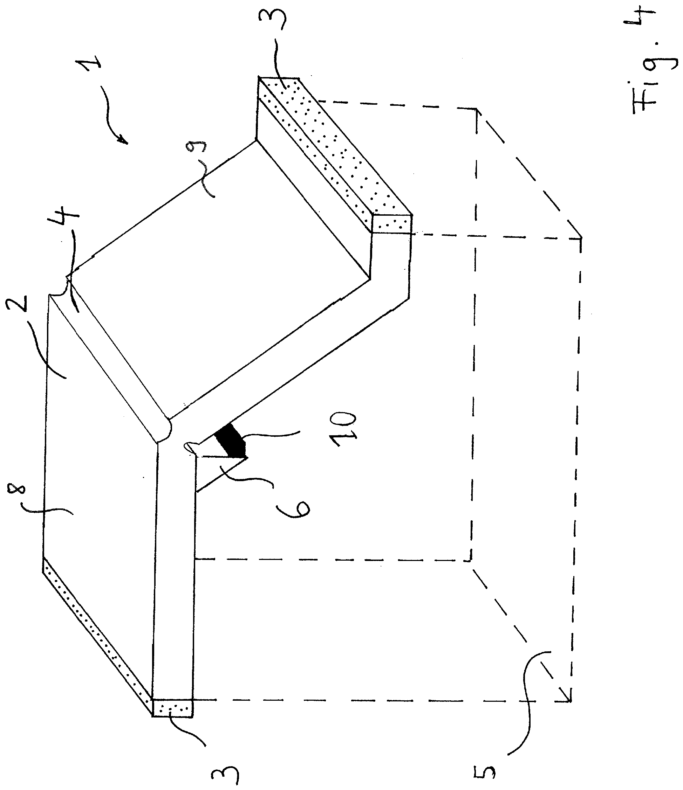

Figur 4 zeigt einen Ausschnitt eines weiteren Ausführungsbeispiels des Schottteils 1 in perspektivischer Ansicht. Auch hier ist das Schottteil 1 mit einem als Filmscharnier ausgebildeten Ausgleichselement 4 ausgerüstet. Die das Filmscharnier bildende Dünnstelle ist in dieser Darstellung gut zu erkennen. Eine Biegung des Trägers 2 im Bereich der Dünnstelle ist durch das Begrenzungselement 6, welches hier an einem feststehenden Abschnitt 8 des Trägers 2 angeordnet ist, begrenzt. Das Begrenzungselement 6 weist eine Anstoßkante 10 auf, die stoßdämpfend ausgelegt ist, so dass durch das Anstoßen kein Schaden am Träger 2 entsteht. Aus Figur 4 wird darüber hinaus die Bedeutung der effektiven Abdichtungsfläche 5 als Projektionsfläche des Trägers 2 nochmals deutlich.

### Bezugszeichenliste:

- 1: Schottteil
- 2: Träger
- 3: Expansionsmaterial
- 4: Ausgleichselement
- 5: Effektive Abdichtungsfläche
- 6: Begrenzungselement
- 7: Positionierhilfe
- 8: Feststehender Abschnitt
- 9: Beweglicher Abschnitt
- 10: Anstoßkante
- 11: Blech

## Patentansprüche

1. Schottteil (1) zur Abdichtung und/oder Abstützung eines Hohlraums, umfassend einen Träger (2) sowie ein an dem Träger (2) angeordnetes Expansionsmaterial (3), welches durch Aktivierung aus einem Ausgangszustand in einen expandierten Zustand überführbar ist, wobei der Träger (2) mindestens ein Ausgleichselement (4) umfasst, durch welches eine Veränderlichkeit einer effektiven Abdichtungsfläche (5) des Trägers (2) gegeben ist, derart, dass durch eine auf den Träger (2) wirkende Kraft eine Veränderung der effektiven Abdichtungsfläche (5) des Trägers (2) bewirkbar ist, und wobei ein Begrenzungselement (6) vorgesehen ist, durch welches eine mit der Veränderung der effektiven Abdichtungsfläche (5) einhergehende Bewegung zumindest eines Abschnitts des Trägers (2) begrenzt wird, **dadurch gekennzeichnet, dass** das Begrenzungselement (6) eine Anstoßkante (10) umfasst, welche stoßdämpfend ausgebildet ist.

2. Schottteil (1) nach Anspruch 1, **dadurch gekennzeichnet, dass** das Ausgleichselement (4) als Biegeelement ausgebildet ist, durch welches ein Biegewinkel zwischen zwei Abschnitten des Trägers (2) eingeschlossen wird.

3. Schottteil (1) nach einem der Ansprüche 1 oder 2, **dadurch gekennzeichnet, dass** das Ausgleichselement (4) als Dünnstelle ausgebildet ist.

4. Schottteil (1) nach einem der Ansprüche 1 bis 3, **dadurch gekennzeichnet, dass** das Begrenzungselement (6) an einem feststehenden Abschnitt (8) des Trägers (2) angeordnet ist.

5. Schottteil (1) nach einem der Ansprüche 1 bis 3, **dadurch gekennzeichnet, dass** das Begrenzungselement (6) an einem beweglichen Abschnitt (9) des Trägers (2) angeordnet ist.

6. Schottteil (1) nach einem der Ansprüche 1 bis 5, **dadurch gekennzeichnet, dass** das Schottteil (1) mit mindestens einer Positionierhilfe (7) ausgerüstet ist, wobei die Positionierhilfe (7) eine Stützrippe umfasst, die ein Element zur Positionierung des Trägers (2) aufweist.

## Claims

1. A partition (1) for sealing and/or supporting a cavity, comprising a carrier (2) and an expansion material (3) arranged on the carrier (2), which expansion material can be transferred from an initial state to an expanded state by means of activation, the carrier (2) comprising at least one compensation element (4), which provides variability of an effective sealing surface (5) of the carrier (2), such that a change in the effective sealing surface (5) of the carrier (2) can be brought about by means of a force acting on the carrier (2) a limiting element (6) being provided, by means of which a movement of at least one portion of the carrier (2) which accompanies the change in the effective sealing surface (5) is limited, **characterized in that** the limiting element (6) comprises an abutment edge (10) which is designed to absorb shocks.

2. The partition (1) according to claim 1, **characterized in that** the compensation element (4) is designed as a bending element, by means of which a bending angle is enclosed between two portions of the carrier (2).

3. The partition (1) according to one of claims 1 or 2, **characterized in that** the compensation element (4) is designed as a thin spot.

4. The partition (1) according to one of claims 1 to 3, **characterized in that** the limiting element (6) is arranged on a stationary portion (8) of the carrier (2).

5. The partition (1) according to one of claims 1 to 3, **characterized in that** the limiting element (6) is arranged on a movable portion (9) of the carrier (2).

6. The partition (1) according to one of claims 1 to 5, **characterized in that** the partition (1) is equipped with at least one positioning aid (7), the positioning aid (7) comprising a support rib, which has an element for positioning the carrier (2).

## Revendications

1. Pièce de cloison (1) permettant d'assurer l'étanchéité et/ou le soutien d'une cavité, comprenant un support (2) ainsi qu'un matériau d'expansion (3) agencé sur le support (2), lequel matériau d'expansion peut être transformé par activation d'un état initial en un état expansé, dans laquelle le support (2) comprend au moins un élément de compensation (4), par le biais duquel une variabilité d'une surface d'étanchéité (5) efficace du support (2) est fournie, de sorte qu'une force agissant sur le support (2) peut provoquer une variation de la surface d'étanchéité (5) efficace du support (2) et dans laquelle un élément de limitation (6) est prévu, par le biais duquel un mouvement d'au moins une section du support (2) accompagnant la variation de la surface d'étanchéité (5) efficace est limité, **caractérisée en ce que** l'élément de limitation (6) comprend une arête de butée (10), laquelle est réalisée de manière à amortir les chocs.

2. Pièce de cloison (1) selon la revendication 1, **caractérisée en ce que** l'élément de compensation (4) est réalisé sous la forme d'un élément de flexion, par le biais duquel un angle de flexion est inclus entre deux sections du support (2).

3. Pièce de cloison (1) selon l'une des revendications 1 ou 2,
**caractérisée en ce que** l'élément de compensation (4) est réalisé sous forme de point mince.

4. Pièce de cloison (1) selon l'une des revendications 1 à 3,
**caractérisée en ce que** l'élément de limitation (6) est agencé sur une section fixe (8) du support (2).

5. Pièce de cloison (1) selon l'une des revendications 1 à 3,
**caractérisée en ce que** l'élément de limitation (6) est agencé sur une section mobile (9) du support (2).

6. Pièce de cloison (1) selon l'une des revendications 1 à 5,
**caractérisée en ce que** la pièce de cloison (1) est équipée d'au moins une aide au positionnement (7), dans laquelle l'aide au positionnement (7) comprend une nervure de soutien qui présente un élément pour le positionnement du support (2).
